# EUROPEAN PATENT APPLICATION

(11) **EP 4 080 087 A1**
(43) Date of publication of application: **26.10.2022**
(21) Application number: 21744914.9
(22) Date of filing: 20.01.2021
(51) Int. Cl.: F16H 49/00, H02K 7/10, H02K 49/10

(54) **POLE SHOE DEVICE, MAGNETIC GEAR, MAGNETIC GEARED MOTOR, AND MAGNETIC GEARED ELECTRIC GENERATOR**

(30) Priority: 24.01.2020 JP 2020009603
(71) Applicant: Mitsubishi Heavy Industries, Ltd., Tokyo 100-8332 (JP)
(72) Inventor: SAKAI, Masayuki, Tokyo 100-8332 (JP); AOKI, Yasutaka, Tokyo 100-8332 (JP); SHIMIZU, Takayuki, Tokyo 100-8332 (JP); OKABE, Ryoji, Tokyo 100-8332 (JP); UMEDA, Akihiko, Tokyo 100-8332 (JP); MATSUSHITA, Takatoshi, Tokyo 100-8332 (JP); SASAKI, Mikito, Tokyo 100-8332 (JP)
(74) Representative: Studio Torta S.p.A.
(86) International application number: PCT/JP2021/001840
(87) International publication number: WO 2021/149720

(57) **Abstract**

A magnetic pole piece device is a magnetic pole piece device disposed between an inner diameter side magnet field and an outer diameter side magnet field of a magnetic gear, that includes: an outer circumferential cover member disposed opposite to the outer diameter side magnet field and having a cylindrical shape; an inner circumferential cover member disposed opposite to the inner diameter side magnet field and having a cylindrical shape; and a plurality of magnetic pole pieces disposed at intervals in a circumferential direction between the outer circumferential cover member and the inner circumferential cover member. The outer circumferential cover member includes a plurality of outer circumferential side facing portions facing outer circumferential surfaces of the plurality of magnetic pole pieces, and a plurality of outer circumferential side connecting portions for connecting two adjacent outer circumferential side facing portions of the plurality of outer circumferential side facing portions. The inner circumferential cover member includes a plurality of inner circumferential side facing portions facing inner circumferential surfaces of the plurality of magnetic pole pieces, and a plurality of inner circumferential side connecting portions for connecting two adjacent inner circumferential side facing portions of the plurality of inner circumferential side facing portions. Each of the plurality of outer circumferential side connecting portions includes an outer circumferential side communication portion. Each of the plurality of inner circumferential side connecting portions includes an inner circumferential side communication portion.

## Description

### TECHNICAL FIELD

The present disclosure relates to a magnetic pole piece device and a magnetic gear including the magnetic pole piece device.

The present application claims priority on Japanese Patent Application No. 2020-009603 filed on January 24, 2020, the entire content of which is incorporated herein by reference.

### BACKGROUND

As one type of gear device, there is a magnetic gear which utilizes an attractive force and a repulsive force of a magnet to transmit torque or motion in a non-contact manner, thereby being able to avoid a problem such as wear, vibration, or noise caused by tooth contact. A flux-modulated type (harmonic type) magnetic gear of the magnetic gear includes an inner circumferential side magnet field and an outer circumferential side magnet field concentrically (coaxially) disposed, and a magnetic pole piece device which has a plurality of magnetic pole pieces (pole pieces) and a plurality of non-magnetic bodies each being disposed with a gap (air gap) between these two magnet fields and alternately arranged in the circumferential direction (see Patent Documents 1 and 2). Then, magnetic fluxes of magnets of the above-described two magnet fields are modulated by the above-described respective magnetic pole pieces to generate harmonic magnetic fluxes, and the above-described two magnet fields are synchronized with the harmonic magnetic fluxes, respectively, thereby operating the flux-modulated type magnetic gear.

For example, in a magnetic geared motor in which the flux-modulated type magnetic gear and a motor are integrated, the above-described outer circumferential side magnet field is fixed to function as a stator, as well as the above-described inner circumferential side magnet field is functioned as a high-speed rotor and the above-described magnetic pole piece device is functioned as a low-speed rotor. Then, by rotating the high-speed rotor by a magnetomotive force of a coil, the low-speed rotor rotates according to the reduction ratio which is determined by the ratio of the number of pole pairs of the high-speed rotor and the number of pole pairs of the low-speed rotor. As the magnetic geared motor, for example, a type in which a permanent magnet is installed in a high-speed rotor and a stator, or a type in which a permanent magnet is installed only in a high-speed rotor is known.

### Citation List

### Patent Literature

Patent Document 1: US9425655B
Patent Document 2: JP5286373B

### SUMMARY

### Technical Problem

The above-described magnetic pole piece device receives magnetic forces generated by magnets, such as permanent magnets, of the above-described two magnet fields adjacent to each other on the inner circumferential side and the outer circumferential side. Thus, without rigidity above a certain level, there is a risk of deforming in the radial direction and interfering with the magnets of the above-described magnet fields adjacent in the radial direction. Thus, in order to prevent the radial deformation with respect to the above-described magnetic forces, it is conceivable to increase the rigidity by installing a tubular cover member with a high elastic modulus on, for example, the outer circumferential side or the inner circumferential side of the plurality of magnetic pole pieces.

Herein, heat is generated due to iron loss in the above-described magnetic pole pieces, and the magnetic pole pairs (a stator magnet, a rotor magnet in the magnetic geared motor) of each of the magnet fields opposite to the inner diameter side and the outer diameter side of the magnetic pole pieces have a stricter temperature specs than the magnetic pole pieces. Thus, aggressive heat removal needs to be performed on air gaps, which are formed between the magnetic pole piece device (plurality of magnetic pole pieces) and the two magnet fields on the inner diameter side and the outer diameter side adjacent (opposite) to the magnetic pole piece device, by, for example, supplying a cooling medium (such as air) so that the cooling medium flows along the axial direction of the air gaps. However, if the above-described cover member covers both radial sides of the plurality of magnetic pole pieces, the cooling medium supplied to the air gaps has no choice but to flow from one end side to another end side of the air gaps along the cover member, and the longer the air gaps are in the axial direction, the higher the temperature of the cooling medium as the cooling medium flows, resulting in a decrease in cooling performance on the downstream side.

In view of the above, an object of at least one embodiment of the present invention is to provide a magnetic pole piece device for a magnetic gear having improved rigidity and cooling performance.

### Solution to Problem

A magnetic pole piece device according to at least one embodiment of the present invention is a magnetic pole piece device disposed between an inner diameter side magnet field and an outer diameter side magnet field of a magnetic gear, that includes: an outer circumferential cover member disposed opposite to the outer diameter side magnet field and having a cylindrical shape; an inner circumferential cover member disposed opposite to the inner diameter side magnet field and having a cylindrical shape; and a plurality of magnetic pole pieces disposed at intervals in a circumferential direction between the outer circumferential cover member and the inner circumferential cover member. The outer circumferential cover member includes a plurality of outer circumferential side facing portions facing outer circumferential surfaces of the plurality of magnetic pole pieces, and a plurality of outer circumferential side connecting portions for connecting two adjacent outer circumferential side facing portions of the plurality of outer circumferential side facing portions. The inner circumferential cover member includes a plurality of inner circumferential side facing portions facing inner circumferential surfaces of the plurality of magnetic pole pieces, and a plurality of inner circumferential side connecting portions for connecting two adjacent inner circumferential side facing portions of the plurality of inner circumferential side facing portions. Each of the plurality of outer circumferential side connecting portions includes an outer circumferential side communication portion through which an inner circumferential side and an outer circumferential side of the outer circumferential cover member communicate with each other. Each of the plurality of inner circumferential side connecting portions includes an inner circumferential side communication portion through which an inner circumferential side and an outer circumferential side of the inner circumferential cover member communicate with each other.

A magnetic gear according to at least one embodiment of the present invention includes: an inner diameter side magnet field; an outer diameter side magnet field disposed on an outer diameter side relative to the inner diameter side magnet field; and the above-described magnetic pole piece device disposed between the inner diameter side magnet field and the outer diameter side magnet field.

### Advantageous Effects

According to at least one embodiment of the present invention, provided is a magnetic pole piece device for a magnetic gear having improved rigidity and cooling performance.

### BRIEF DESCRIPTION OF DRAWINGS

FIG. 1 is a schematic view showing a cross section of a magnetic gear along the radial direction according to an embodiment of the present invention.
FIG. 2 is a partially enlarged view of the cross section of the magnetic gear shown in FIG. 1.
FIG. 3 is a schematic view showing the cross section of the magnetic gear along the axial direction according to an embodiment of the present invention.
FIG. 4 is a perspective view schematically showing a part of a magnetic pole piece device according to an embodiment of the present invention.
FIG. 5 is a perspective view schematically showing a part of the magnetic pole piece device according to an embodiment of the present invention.
FIG. 6 is a perspective view schematically showing a part of the magnetic pole piece device according to an embodiment of the present invention.
FIG. 7 is a perspective view schematically showing a part of the magnetic pole piece device according to an embodiment of the present invention.
FIG. 8 is a schematic view showing a cross section of the magnetic pole piece device along the radial direction according to an embodiment of the present invention.
FIG. 9 is a view for describing a flow direction of a cooling medium in the magnetic gear according to an embodiment of the present invention.

### DETAILED DESCRIPTION

Some embodiments of the present invention will be described below with reference to the accompanying drawings. It is intended, however, that unless particularly identified, dimensions, materials, shapes, relative positions and the like of components described or shown in the drawings as the embodiments shall be interpreted as illustrative only and not intended to limit the scope of the present invention.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same", "equal", and "uniform" shall not be construed as indicating only the state in which the feature is strictly equal, but also includes a state in which there is a tolerance or a difference that can still achieve the same function.

Further, for instance, an expression of a shape such as a rectangular shape or a tubular shape shall not be construed as only the geometrically strict shape, but also includes a shape with unevenness or chamfered corners within the range in which the same effect can be achieved.

On the other hand, the expressions "comprising", "including", "having", "containing", and "constituting" one constituent component are not exclusive expressions that exclude the presence of other constituent components.

### (Configuration of magnetic gear 9)

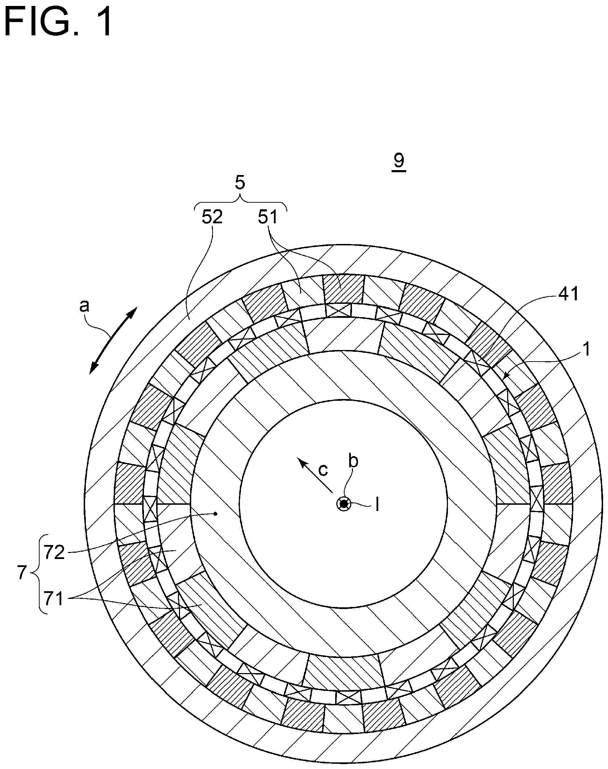

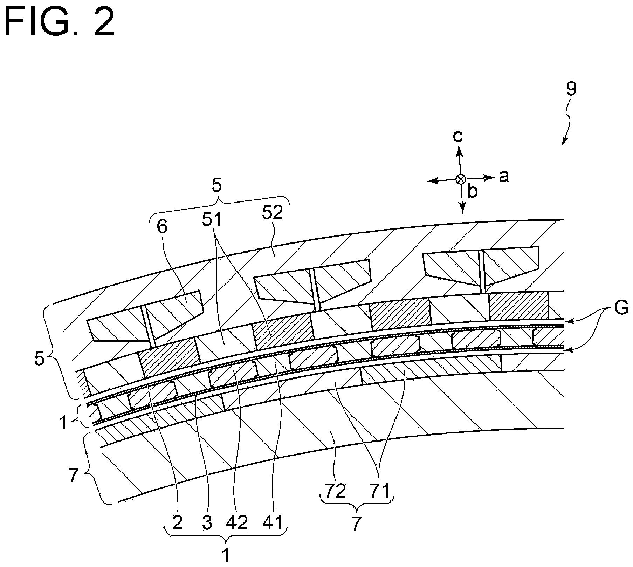

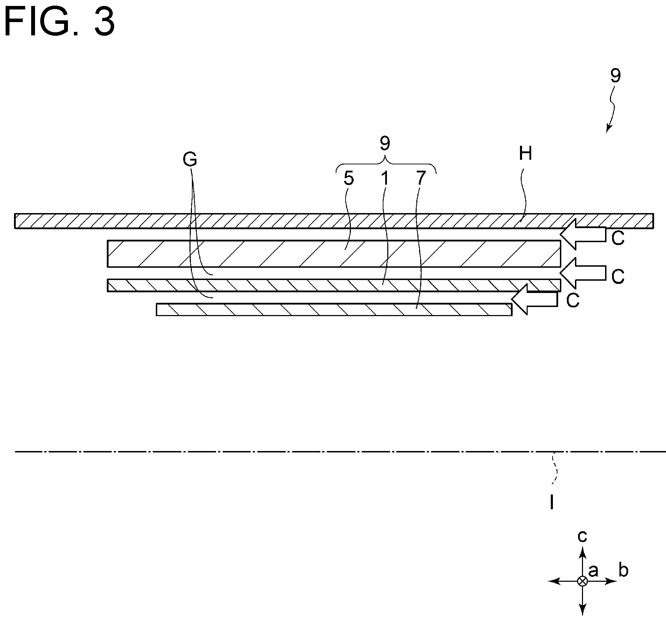

FIG. 1 is a schematic view showing a cross section of a magnetic gear 9 along a radial direction c according to an embodiment of the present invention. FIG. 2 is a partially enlarged view of the cross section of the magnetic gear 9 shown in FIG. 1. FIG. 3 is a schematic view showing the cross section of the magnetic gear 9 along an axial direction b according to an embodiment of the present invention. In the following, a description will be given with a direction along a rotation direction of the magnetic gear 9 (magnetic pole piece device 1) being a circumferential direction a, a direction along a rotational axis of the magnetic gear 9 (magnetic pole piece device 1) being an axial direction b, and a direction (radial direction) orthogonal to the circumferential direction a and the axial direction b described above being the radial direction c.

The magnetic gear 9 is a device having a mechanism for transmitting torque in a non-contact manner by utilizing an attractive force and a repulsive force of a magnet. The magnetic gear 9 shown in FIGs. 1 to 3 is of a flux-modulated type (harmonic type) and, as illustrated, includes an outer diameter side magnet field 5 (outer rotor) having a cylindrical shape (annular; the same applies hereinafter) as a whole, an inner diameter side magnet field 7 (inner rotor) having a cylindrical or columnar shape as a whole, and a magnetic pole piece device 1 (center rotor) having a cylindrical shape as a whole. Then, the magnetic gear 9 has a structure where the outer diameter side magnet field 5, the inner diameter side magnet field 7, and the magnetic pole piece device are disposed at intervals (air gaps Ga) of a constant distance from each other in the radial direction c on a same axis 1 (coaxial) such that the magnetic pole piece device 1 is disposed between the outer diameter side magnet field 5 and the inner diameter side magnet field 7. That is, the outer diameter side magnet field 5 is disposed on the radially outer side (outer diameter side) relative to the inner diameter side magnet field 7. Further, the magnetic pole piece device 1 is disposed between the inner diameter side magnet field 7 and the outer diameter side magnet field 5. Then, the outer diameter side magnet field 5, the inner diameter side magnet field 7, and the magnetic pole piece device 1 are disposed concentrically.

Further, as shown in FIG. 2, the outer diameter side magnet field 5 and the inner diameter side magnet field 7 described above, respectively, include magnetic pole pairs (51, 71), such as permanent magnets, which are composed of a plurality of N poles and S poles disposed at intervals (regular intervals) on the circumference in a cross section of the magnetic gear 9 cut along the radial direction c (hereinafter, the radial cross section). More specifically, the outer diameter side magnet field 5 includes the plurality of magnetic pole pairs 51 and a support member 52 for supporting the plurality of magnetic pole pairs 51. Then, on the cylindrical inner circumferential surface of the outer diameter side magnet field 5, the plurality of magnetic pole pairs 51 are installed over the whole circumference in a state where the magnetic poles face the radial direction c and such that the N poles and the S poles are alternated along the circumferential direction. Likewise, the above-described inner diameter side magnet field 7 includes the plurality of magnetic pole pairs 71 and a columnar support member 72 for supporting the plurality of magnetic pole pairs 71. Then, on the cylindrical outer circumferential surface of the inner diameter side magnet field 7, the plurality of magnetic pole pairs 71 are installed over the whole circumference along the circumferential direction a, in the same manner as above. Further, the magnetic pole piece device 1 includes a plurality of magnetic pole pieces 41 (pole pieces) disposed at intervals (regular intervals) from each other over the whole circumference in the circumferential direction a. Then, for example, if the inner diameter side magnet field 7 is rotated, the magnetic flux of the inner diameter side magnet field 7 is modulated by the magnetic pole pieces 41 of the magnetic pole piece device 1, and rotational torque is generated in the magnetic pole piece device 1 by the action of the modulated magnetic field and the outer diameter side magnet field 5.

In the embodiments shown in FIGs. 1 to 3, the magnetic gear 9 (flux-modulated type magnetic gear) is integrated with a motor to form a magnetic geared motor. In more details, a plurality of coils 6 (see FIG. 2) are installed in the outer diameter side magnet field 5 to each be used as a stator, and the inner diameter side magnet field 7 (high-speed rotor) is rotated by a magnetomotive force of the coils 6. Thus, the magnetic pole piece device 1 (low-speed rotor) rotates according to the reduction ratio which is determined by the ratio of the number of pole pairs of the magnetic pole pairs 51 of the outer diameter side magnet field 5 to the number of pole pairs of the magnetic pole pairs 71 of the inner diameter side magnet field 7.

The magnetic gear 9 is also applicable to a magnetic geared generator in which a flux-modulated type magnetic gear and a generator are integrated. The magnetic geared generator is different from the magnetic geared motor in that the high-speed rotor rotates with the rotation of the low-speed rotor, but is the same as the magnetic geared motor in configuration of the low-speed rotor, the high-speed rotor, and the stator.

Further, the magnetic geared motor is supplied with a cooling medium C, such as air or water, in order to protect the above-described constituent elements from heat generated during operation. In the embodiments shown in FIGs. 1 to 3, as shown in FIG. 3, the air gaps G are formed between the inner diameter side magnet field 7 and the magnetic pole piece device 1 and between the outer diameter side magnet field 5 and the magnetic pole piece device 1, respectively. Then, the cooling medium C is supplied to each of these cylindrical air gaps G so as to flow from one end side toward another end side. Further, the cooling medium C is similarly supplied to a gap formed between the outer diameter side magnet field 5 and a housing H located on the outer circumferential side thereof. A gas such as air may be supplied to the gap between the outer diameter side magnet field 5 and the housing H described above, or a water cooling tube may be installed to flow cooling water or the like through the water cooling tube.

In the magnetic gear 9 (flux-modulated type magnetic gear) having the above configuration, the above-described magnetic pole piece device 1 receives magnetic forces of the above-described two magnet fields (5, 7) adjacent to each other on the inner circumferential side and the outer circumferential side. Thus, insufficient rigidity may cause deformation in the radial direction c and interference with the magnetic pole pairs (51, 71) of the above-described magnet fields adjacent in the radial direction c. Thus, the above-described magnetic pole piece device 1 is configured as follows.

### (Configuration of magnetic pole piece device 1)

Hereinafter, the magnetic pole piece device 1 will be described in detail with reference to FIGs. 2 and 4 to 9.

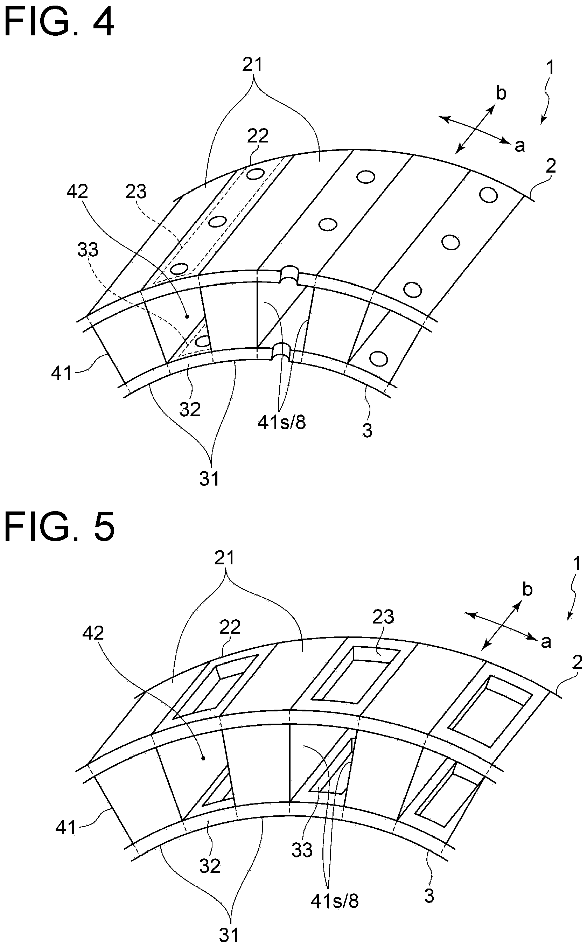

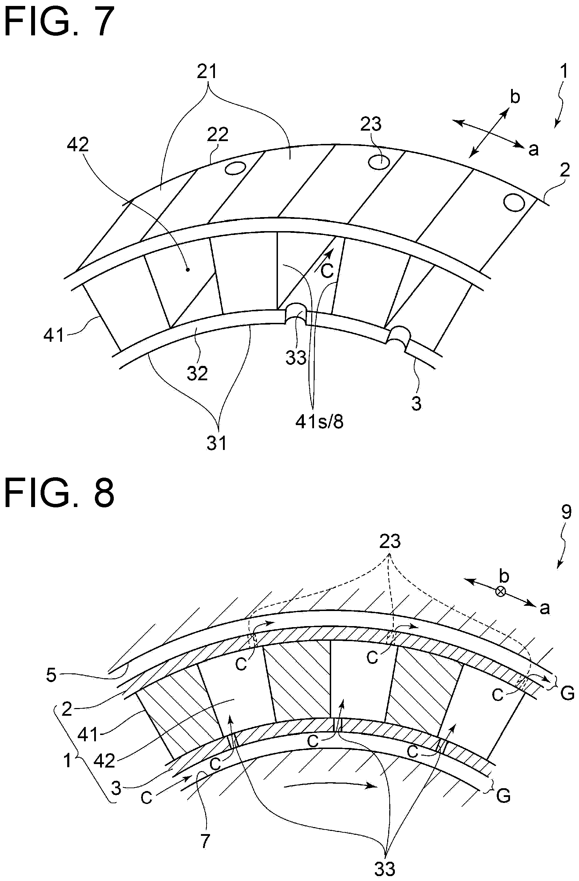

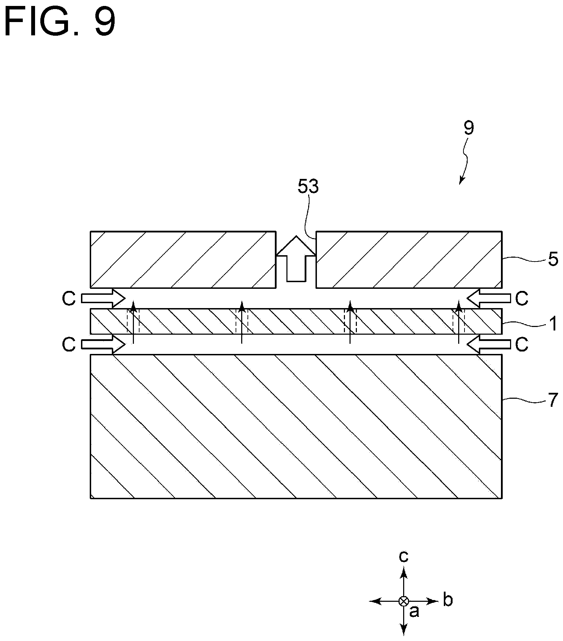

FIGs. 4 to 7 are each a perspective view schematically showing a part of the magnetic pole piece device 1 according to an embodiment of the present invention. FIG. 8 is a schematic view showing a cross section of the magnetic pole piece device 1 along the radial direction c according to an embodiment of the present invention. FIG. 9 is a view for describing a flow direction of the cooling medium C in the magnetic gear 9 according to an embodiment of the present invention.

As described above, the magnetic pole piece device 1 is, for example, a device (member) that forms the magnetic gear 9 which serves as the flux-modulated type magnetic gear or the like forming the magnetic geared motor, and is a device (member) disposed between the inner diameter side magnet field 7 (the high-speed rotor in the magnetic geared motor) and the outer diameter side magnet field 5 (the stator in the magnetic geared motor) in the magnetic gear 9. As shown in FIGs. 4 to 8 (the same also applies to FIG. 2), the magnetic pole piece device 1 includes an outer circumferential cover member 2 disposed opposite to the inner circumferential surface of the outer diameter side magnet field 5, an inner circumferential cover member 3 disposed opposite to the outer circumferential surface of the inner diameter side magnet field 7, and a plurality of magnetic pole pieces 41 (pole pieces) disposed between these two cover members.

Describing in detail, the outer circumferential cover member 2 and the inner circumferential cover member 3 are members each having a cylindrical shape as a whole. Further, the inner circumferential cover member 3 has a smaller diameter than the outer circumferential cover member 2 and disposed coaxially on the inner side of the outer circumferential cover member 2, forming a cylindrical space over the entire circumference between the inner circumferential surface of the outer circumferential cover member 2 and the outer circumferential surface of the inner circumferential cover member 3. Then, in the cylindrical space, the plurality of long magnetic pole pieces 41 are disposed at intervals in the circumferential direction a with a longitudinal direction of each of the magnetic pole pieces 41 oriented along the axial direction b. In other words, the above-described two cover members (2, 3) are disposed so as to sandwich the plurality of magnetic pole pieces 41.

In the magnetic pole piece device 1 having the above configuration, as shown in FIGs. 4 to 8, each of the above-described two cover members includes a communication portion (23, 33) which is formed in a section facing between the two adjacent magnetic pole pieces 41 (interjacent space 42). More specifically, as shown in FIGs. 4 to 8, the outer circumferential cover member 2 includes a plurality of outer circumferential side facing portions 21 facing the outer circumferential surfaces of the plurality of magnetic pole pieces 41 described above, and a plurality of outer circumferential side connecting portions 22 for connecting two adjacent outer circumferential side facing portions 21 of the plurality of outer circumferential side facing portions 21. Then, each of the plurality of outer circumferential side connecting portions 22 includes the outer circumferential side communication portion 23 through which the inner circumferential side and the outer circumferential side of the outer circumferential cover member 2 communicate with each other.

Likewise, the inner circumferential cover member 3 includes a plurality of inner circumferential side facing portions 31 facing the inner circumferential surfaces of the plurality of magnetic pole pieces 41 described above, and a plurality of inner circumferential side connecting portions 32 for connecting two adjacent inner circumferential side facing portions 31 of the plurality of inner circumferential side facing portions 31. Then, each of the plurality of inner circumferential side connecting portions 32 includes the inner circumferential side communication portion 33 through which the inner circumferential side and the outer circumferential side of the inner circumferential cover member 3 communicate with each other.

In short, the plurality of spaces (interjacent spaces 42), each of which is surrounded by the two adjacent magnetic pole pieces 41, the outer circumferential cover member 2 (outer circumferential side connecting portion 22), and the inner circumferential cover member 3 (inner circumferential side connecting portion 32), are formed in the magnetic pole piece device 1, and each of the plurality of spaces is configured to communicate with each other in the radial direction c by the outer circumferential side communication portion 23 and the inner circumferential side communication portion 33. Thus, if the cooling medium C is supplied to the air gaps G existing on both the outer circumferential side (radially outer side) and the inner circumferential side (radially inner side) of the magnetic pole piece device 1 described above, the cooling medium C can pass through the inside of the magnetic pole piece device 1 via the above-described communication portion (23, 33).

As to the communication portion (23, 33), in some embodiments, as shown in FIGs. 4, 5, 7, and 8, at least one of the outer circumferential side communication portion 23 or the inner circumferential side communication portion 33 may include one or more through holes. In the embodiment shown in FIG. 4, both the outer circumferential side communication portion 23 and the inner circumferential side communication portion 33 include a plurality of (in FIG. 4, three or more) through holes disposed along the axial direction b and each having a circular cross-sectional shape. On the other hand, in the embodiment shown in FIG. 5, the outer circumferential side communication portion 23 and the inner circumferential side communication portion 33 include one through hole having a long quadrangular cross-sectional shape in the axial direction b. In FIGs. 4 and 5, the cross-sectional shape of the through hole may be another shape such as an elliptical shape, in addition to, for example, the circular system or the quadrilateral shape. Further, although the cross-sectional diameter of the through hole is constant, the cross-sectional diameter may not be constant, for example, the cross-sectional diameter increases or decreases along a flow direction.

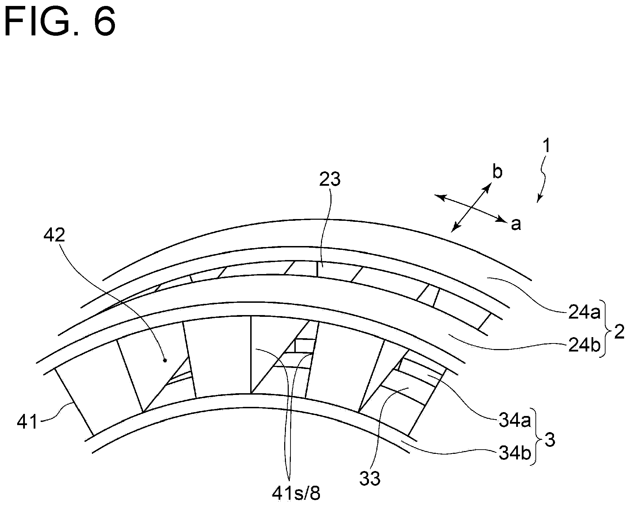

In some other embodiments, as shown in FIG. 6, at least one of the outer circumferential cover member 2 or the inner circumferential cover member 3 is formed of a plurality of cylindrical tubular members (24a, 34a) disposed at an interval from each other in the axial direction b, and at least one of the outer circumferential side communication portion 23 or the inner circumferential side communication portion 33 described above may be formed by the above-described interval in the axial direction b.

In the embodiment shown in FIG. 6, both the outer circumferential cover member 2 and the inner circumferential cover member 3 are constituted by the two cylindrical members. That is, the outer circumferential cover member 2 includes the first cylindrical member 24a and a second cylindrical member 24b, and the outer circumferential side communication portion 23 is formed by respective side walls of the first cylindrical member 24a and the second cylindrical member 24b. Likewise, the inner circumferential cover member 3 includes the first cylindrical member 34a and a second cylindrical member 34b, and the inner circumferential side communication portion 33 is formed by respective side walls of the first cylindrical member 34a and the second cylindrical member 34b.

In FIG. 6, the outer circumferential side facing portion 21 and the inner circumferential side facing portion 31 do not cover the outer circumferential surface or the inner circumferential surface of the magnetic pole piece 41 in the middle of the axial direction b. However, in some other embodiments, at least a part of the above-described uncovered portion may be covered by a connecting portion (not shown) of the cover member for axially connecting a portion of the cylindrical member forming the outer circumferential side facing portion 21 or the inner circumferential side facing portion 31. In the embodiment shown in FIG. 6, the plurality of magnetic pole pieces 41 are supported by the outer circumferential side facing portion 21 and the inner circumferential side facing portion 31, but can firmly be supported by the above-described connecting portion (not shown).

In some other embodiments, the above-described two embodiments may be combined. That is, in the embodiments shown in FIGs. 4 to 6, the outer circumferential side communication portion 23 and the inner circumferential side communication portion 33 have the same configuration. However, the outer circumferential side communication portion 23 and the inner circumferential side communication portion 33 may have different configurations where, for example, the outer circumferential side communication portion 23 has the configuration of FIG. 5 and the inner circumferential side communication portion 33 has the configuration of FIG. 4.

In addition, in the embodiments shown in FIGs. 4 to 8, the plurality of magnetic pole pieces 41 are supported by the outer circumferential cover member 2 and the inner circumferential cover member 3. Further, the interjacent space 42 between the plurality of magnetic pole pieces 41 between the two cover members is delimited by the side surfaces 41s of the magnetic pole pieces 41. However, the present invention is not limited to the present embodiment. In some other embodiments, the magnetic pole piece device 1 includes a plateshaped delimiting member 8 for positioning each magnetic pole piece 41 while connecting the outer circumferential cover member 2 and the inner circumferential cover member 3 to each other in the radial direction c, whereby the above-described interjacent space 42 may be delimited by the delimiting member 8. Further, in some other embodiments, the magnetic pole piece device 1 may further include a holding member (not shown) such as a plurality of non-magnetic bodies installed in the interjacent space 42, and each magnetic pole piece 41 may be supported by the holding member, or the holding member and the above-described cover member. In this case, for example, the holding member includes a through hole communicating with the outer circumferential side communication portion 23 and the inner circumferential side communication portion 33, or is formed of a porous body (including a lattice structure), thereby allowing the cooling medium C to pass through the inside of the holding member. The above-described delimiting member 8 may exist between the holding member (not shown) and the magnetic pole piece 41.

With the above configuration, the magnetic pole piece device 1 forming the magnetic gear 9, such as the flux-modulated type magnetic gear, has a structure where the plurality of long magnetic pole pieces 41 (pole pieces), each of which extends such that its longitudinal direction is along the axial direction b, are disposed at intervals in the circumferential direction a between the outer circumferential cover member 2 and the inner circumferential cover member 3 disposed coaxially. Then, in each of the outer circumferential cover member 2 and the inner circumferential cover member 3, the communication portion (outer circumferential side communication portion 23, inner circumferential side communication portion 33) through which the inner circumferential surface and the outer circumferential surface of each of the outer circumferential cover member 2 and the inner circumferential cover member 3 communicate with each other is formed in the portion (outer circumferential side connecting portion 22, inner circumferential side connecting portion 32) facing between the plurality of magnetic pole pieces 41 (interjacent space 42). That is, with the above-described communication portion, the cooling medium C can pass through the inside of the magnetic pole piece device 1 in the radial direction c.

Thus, it is possible to improve cooling performance of the magnetic pole piece device 1 by using the side surface (the surface facing the circumferential direction a) of each magnetic pole piece 41 as a cooling surface, while increasing the rigidity of the magnetic pole piece device 1 by the outer circumferential cover member and the inner circumferential cover member. Further, since the cooling medium C can flow through the inside of the magnetic pole piece device 1, it is possible to greatly improve the degree of freedom in designing a cooling path. Accordingly, as will be described later, it is also possible to design such that the temperature of the cooling medium C is kept low over the whole area of the magnetic pole piece device 1 in the axial direction b. Further, for example, if the flow direction of the cooling medium C in the magnetic pole piece device 1 is unidirectional, such as from the inner side to the outer side in the radial direction c, it is also possible to design such that a jet flow of the cooling medium C after passing through the inside of the magnetic pole piece device 1 directly collides with, for example, the magnet of the outer diameter side magnet field 5. Thus, it is also possible to improve cooling performance of the magnet field around the magnetic pole piece device 1.

Next, some embodiments regarding the arrangement of the outer circumferential side communication portion 23 and the inner circumferential side communication portion 33 described above will be described with reference to FIGs. 7 and 8.

In some embodiments, as shown in FIGs. 7 and 8, the respective communication portions (23, 33) of the outer circumferential cover member 2 and the inner circumferential cover member 3 facing the same interjacent space 42 may be arranged at positions offset from each other in at least one of the axial direction b or the circumferential direction a.

That is, in some embodiments, the above-described plurality of outer circumferential side connecting portions 22 include the first outer circumferential side connecting portion 22 which is any outer circumferential side connecting portion 22, and the plurality of inner circumferential side connecting portions 32 include the first inner circumferential side connecting portion 32 facing the first outer circumferential side connecting portion 22, and the outer circumferential side communication portion 23 of the first outer circumferential side connecting portion 22 and the inner circumferential side communication portion 33 of the first inner circumferential side connecting portion 32 may be located at different positions in the axial direction b. The cooling medium C is supplied so as to flow through the above-described air gap G from one end side toward another end side in the axial direction b, and the communication portion of the magnetic pole piece device 1 serving as an inlet for the cooling medium C is formed to be on the upstream side relative to the communication portion serving as an outlet in the flow direction of the cooling medium C. In the embodiment shown in FIG. 7, the inner circumferential side communication portion 33 (inlet) is formed on the upstream side in the flow direction of the cooling medium C relative to the outer circumferential side communication portion 23 (outlet).

In some other embodiments, the outer circumferential side communication portion 23 of the first outer circumferential side connecting portion 22 and the inner circumferential side communication portion 33 of the first inner circumferential side connecting portion 32 described above may be located at different positions in the circumferential direction a. When the magnetic gear 9 rotates, the magnetic pole piece device 1 rotates in the circumferential direction a (see FIG. 8). Thus, the communication portion of the magnetic pole piece device 1 serving as the inlet for the cooling medium C is formed to be in front of the communication portion serving as the outlet in the rotation direction. In the embodiment shown in FIG. 8, the inner circumferential side communication portion 33 (inlet) is formed in front of the outer circumferential side communication portion 23 (outlet) in the rotation direction.

In some other embodiments, the above-described two embodiments may be combined. In the embodiments shown in FIGs. 7 and 8, the outer circumferential side communication portion 23 of the first outer circumferential side connecting portion 22 and the inner circumferential side communication portion 33 of the first inner circumferential side connecting portion 32 described above are located at the different positions in the axial direction b and the circumferential direction a. At this time, the cooling medium C is supplied from one end side of the air gap G on the inner diameter side magnet field 7 side, and escapes to the air gap G on the outer diameter side magnet field 5 side through the inside of the magnetic pole piece device 1. Further, the inner diameter side magnet field 7 rotates clockwise (rotates to the right) with respect to the drawing at a higher speed than the magnetic pole piece device 1. Thus, as shown in FIG. 8, the inner circumferential side communication portion 33 is disposed on the left side of the drawing in the circumferential direction a relative to the outer circumferential side communication portion 23. Further, the positions of the first outer circumferential side communication portions 23 each facing the same interjacent space 42 in the circumferential direction a are at positions more advanced in the rotation direction (right side of the drawing) relative to the first inner circumferential side communication portions 33.

In the embodiments shown in FIGs. 7 and 8, each of the outer circumferential side communication portion 23 and the inner circumferential side communication portion 33 includes one through hole. If the outer circumferential side communication portion 23 and the inner circumferential side communication portion 33 respectively include a plurality of through holes, through holes may be displaced as a whole. Further, if at least one of the outer circumferential cover member 2 or the inner circumferential cover member 3 is formed of two or more cylindrical members, the position or the size of the opening may be different in the axial direction b by adjusting the mutual spacing between the two or more cylindrical members.

With the above configuration, the respective communication portions (23, 33) of the outer circumferential cover member 2 and the inner circumferential cover member 3 are disposed to be located at the different positions of the magnetic pole piece device 1 in at least one of the axial direction b or the circumferential direction a. Thus, it is possible to form the communication portions of the above-described two cover members so as to follow the flow direction of the cooling medium C flowing through the above-described air gap G during the rotation (during the operation) of the magnetic gear 9.

Furthermore, in some embodiments, as shown in FIG. 9, in addition to the above configuration, a communication portion 53 through which the inner circumferential side and the outer circumferential side of the outer diameter side magnet field 5 communicate with each other may further be formed in the outer diameter side magnet field 5. In the embodiment shown in FIG. 9, the communication portion 53 is formed at the center of the outer diameter side magnet field 5 in the axial direction b. Thus, with the outer circumferential side communication portion 23 and the inner circumferential side communication portion 33, and the communication portion 53 of the outer diameter side magnet field 5, the cooling medium C can pass through the inside of the magnetic gear 9 in the radial direction c.

With the above configuration, in the outer diameter side magnet field 5, the communication portion 53 is formed through which the inner circumferential surface and the outer circumferential surface of the outer diameter side magnet field 5 communicate with other. Thus, it is possible to supply the cooling medium C to the magnetic gear 9 from both end sides thereof. Thus, it is possible to discharge the cooling medium C flowing through the inside of the magnetic gear 9 to the outside of the magnetic gear 9 before the temperature of the cooling medium C becomes too high due to heat exchange, and it is possible to decrease the temperature of the cooling medium C in the whole area in the magnetic gear 9 as compared with the case where the communication portion 53 is not formed in the outer diameter side magnet field 5. Accordingly, it is possible to improve the cooling capacity of the magnetic gear 9.

The present invention is not limited to the above-described embodiments, and also includes an embodiment obtained by modifying the above-described embodiments and an embodiment obtained by combining these embodiments as appropriate.

### (Appendix)

(1) A magnetic pole piece device (1) according to at least one embodiment of the present invention is a magnetic pole piece device (1) disposed between an inner diameter side magnet field (7) and an outer diameter side magnet field (5) of a magnetic gear (9), that includes: an outer circumferential cover member (2) disposed opposite to the outer diameter side magnet field (5) and having a cylindrical shape; an inner circumferential cover member (3) disposed opposite to the inner diameter side magnet field (7) and having a cylindrical shape; and a plurality of magnetic pole pieces (41) disposed at intervals in a circumferential direction (a) between the outer circumferential cover member (2) and the inner circumferential cover member (3). The outer circumferential cover member (2) includes a plurality of outer circumferential side facing portions (21) facing outer circumferential surfaces of the plurality of magnetic pole pieces (41), and a plurality of outer circumferential side connecting portions (22) for connecting two adjacent outer circumferential side facing portions of the plurality of outer circumferential side facing portions (21). The inner circumferential cover member (3) includes a plurality of inner circumferential side facing portions (31) facing inner circumferential surfaces of the plurality of magnetic pole pieces (41), and a plurality of inner circumferential side connecting portions (32) for connecting two adjacent inner circumferential side facing portions of the plurality of inner circumferential side facing portions (31). Each of the plurality of outer circumferential side connecting portions (22) includes an outer circumferential side communication portion (23) through which an inner circumferential side and an outer circumferential side of the outer circumferential cover member (2) communicate with each other. Each of the plurality of inner circumferential side connecting portions (32) includes an inner circumferential side communication portion (33) through which an inner circumferential side and an outer circumferential side of the inner circumferential cover member (3) communicate with each other.

With the above configuration (1), the magnetic pole piece device (1) forming the magnetic gear (9), such as the flux-modulated type magnetic gear (9), has the structure where the plurality of magnetic pole pieces (41) (pole pieces), each of which extends such that its longitudinal direction is along the axial direction (b), are disposed at intervals in the circumferential direction (a) between the outer circumferential cover member (2) and the inner circumferential cover member (3) disposed coaxially. Then, in each of the outer circumferential cover member (2) and the inner circumferential cover member (3), the communication portion (53) (outer circumferential side communication portion (23), inner circumferential side communication portion (33)) through which the inner circumferential surface and the outer circumferential surface of each of the outer circumferential cover member (2) and the inner circumferential cover member (3) communicate with each other is formed in the portion (outer circumferential side connecting portion (22), inner circumferential side connecting portion (32)) facing between the plurality of magnetic pole pieces (41) (interjacent space (42)). That is, with the above-described communication portion (53), the cooling medium (C) can pass through the inside of the magnetic pole piece device (1) in the radial direction (c).

Thus, it is possible to improve cooling performance of the magnetic pole piece device (1) by using the side surface (the surface facing the circumferential direction (a)) of each magnetic pole piece (41) as a cooling surface, while increasing the rigidity of the magnetic pole piece device (1) by the outer circumferential cover member (2) and the inner circumferential cover member (3). Further, since the cooling medium (C) can flow through the inside of the magnetic pole piece device (1), it is possible to greatly improve the degree of freedom in designing a cooling path. Accordingly, as will be described later, it is also possible to design such that the temperature of the cooling medium (C) is kept low over the whole area of the magnetic pole piece device (1) in the axial direction (b). Further, for example, if the flow direction of the cooling medium (C) in the magnetic pole piece device (1) is unidirectional, such as from the inner side to the outer side in the radial direction (c), it is also possible to design such that a jet flow of the cooling medium (C) after passing through the inside of the magnetic pole piece device (1) directly collides with, for example, the magnet of the outer diameter side magnet field (5). Thus, it is also possible to improve cooling performance of the magnet field around the magnetic pole piece device (1).

(2) In some embodiments, in the above configuration (1), the plurality of outer circumferential side connecting portions (22) include a first outer circumferential side connecting portion (22), the plurality of inner circumferential side connecting portions (32) include a first inner circumferential side connecting portion (32) facing the first outer circumferential side connecting portion (22), and the outer circumferential side communication portion (23) of the first outer circumferential side connecting portion (22) and the inner circumferential side communication portion (33) of the first inner circumferential side connecting portion (32) are located at different positions in an axial direction (b).

With the above configuration (2), the respective communication portions (53) of the outer circumferential cover member (2) and the inner circumferential cover member (3) are located at the different positions of the magnetic pole piece device (1) in the axial direction (b). Thus, by forming the communication portions (53) of the outer circumferential cover member (2) and the inner circumferential cover member (3) such that the air gaps (G), respectively, formed between the outer circumferential cover member (2) and the outer diameter side magnet field (5) and between the inner circumferential cover member (3) and the inner diameter side magnet field (7) are along the flow direction of the cooling medium (C) (for example, cooling water, cooling air) flowing from one end side to another end side in the axial direction (b), it is possible to reduce a loss when the cooling medium (C) flows through the communication portions (53). Thus, it is possible to reduce power required to supply the cooling medium (C) to the above-described air gaps (G).

(3) In some embodiments, in the above configuration (1) or (2), the plurality of outer circumferential side connecting portions (22) include a first outer circumferential side connecting portion (22), the plurality of inner circumferential side connecting portions (32) include a first inner circumferential side connecting portion (32) facing the first outer circumferential side connecting portion (22), and the outer circumferential side communication portion (23) of the first outer circumferential side connecting portion (22) and the inner circumferential side communication portion (33) of the first inner circumferential side connecting portion (32) are located at different positions in a circumferential direction (a).

With the above configuration (3), the respective communication portions (53) of the outer circumferential cover member (2) and the inner circumferential cover member (3) are located at the different positions of the magnetic pole piece device (1) in the circumferential direction (a). Thus, by forming the communication portions (53) of the above-described two cover members so as to follow the flow direction of the cooling medium (C) flowing through the above-described air gaps (G) during the rotation (during the operation) of the magnetic gear (9), it is possible to reduce the loss when the cooling medium (C) flows through the communication portions (53). Thus, it is possible to reduce power required to supply the cooling medium (C) to the above-described air gaps (G).

(4) In some embodiments, in the above configurations (1) to (3), at least one of the outer circumferential side communication portion (23) or the inner circumferential side communication portion (33) includes one or more through holes.

With the above configuration (4), the communication portion (53) of the outer circumferential cover member (2) or the inner circumferential cover member (3) is formed by the one or more through holes formed in the wall surface of the member. Thus, it is possible to appropriately dispose the above-described communication portion (53) in the cover member.

(5) In some embodiments, in the above configurations (1) to (3), at least one of the outer circumferential cover member (2) or the inner circumferential cover member (3) is formed of a plurality of cylindrical tubular members disposed at an interval from each other in an axial direction (b), and at least one of the outer circumferential side communication portion (23) or the inner circumferential side communication portion (33) is formed by the interval in the axial direction (b).

With the above configuration (5), the communication portion (53) of the outer circumferential cover member (2) or the inner circumferential cover member (3) is formed by coaxially disposing the plurality of tubular member having the same diameter at the interval from each other. Thus, it is possible to appropriately dispose the above-described communication portion (53) in the cover member.

(6) A magnetic gear (9) according to at least one embodiment of the present invention includes: an inner diameter side magnet field (7); an outer diameter side magnet field (5) disposed on an outer diameter side relative to the inner diameter side magnet field (7); and the magnetic pole piece device (1) according to any one of above configurations (1) to (5) disposed between the inner diameter side magnet field (7) and the outer diameter side magnet field (5).

With the above configuration (6), the magnetic gear (9) includes the above-described magnetic pole piece device (1). Thus, it is possible to provide the magnetic gear (9) for achieving the same effect as the above configurations (1) to (5).

(7) In some embodiments, in the above configuration (6), the outer diameter side magnet field (5) includes a communication portion (53) through which an inner circumferential side and an outer circumferential side of the outer diameter side magnet field (5) communicate with each other.

With the above configuration (7), in the outer diameter side magnet field (5), the communication portion (53) is formed through which the inner circumferential surface and the outer circumferential surface of the outer diameter side magnet field (5) communicate with each other. That is, with the communication portion (53) of the outer diameter side magnet field (5), the cooling medium (C) can pass through the inside of the magnetic gear (9) in the radial direction (c). Thus, it is possible to supply the cooling medium (C) to the magnetic gear (9) from both end sides thereof. Thus, it is possible to discharge the cooling medium (C) flowing through the inside of the magnetic gear (9) to the outside of the magnetic gear (9) before the temperature of the cooling medium (C) becomes too high due to heat exchange, and it is possible to decrease the temperature of the cooling medium (C) in the whole area in the magnetic gear (9) as compared with the case where the communication portion (53) is not formed in the outer diameter side magnet field (5). Accordingly, it is possible to improve the cooling capacity of the magnetic gear (9).

(8) A magnetic geared motor according to at least one embodiment of the present invention includes: the magnetic gear (9) according to the above configuration (6) or (7).

With the above configuration (8), it is possible to provide the magnetic geared motor for achieving the same effect as the above configuration (6) or (7).

(9) A magnetic geared generator according to at least one embodiment of the present invention includes: the magnetic gear (9) according to the above configuration (6) or (7).

With the above configuration (9), it is possible to provide the magnetic geared generator for achieving the same effect as the above configuration (6) or (7).

### Reference Signs List

- 1: Magnetic pole piece device
- 2: Outer circumferential cover member
- 21: Outer circumferential side facing portion
- 22: Outer circumferential side connecting portion
- 23: Outer circumferential side communication portion
- 24a: First cylindrical member
- 24b: Second cylindrical member
- 3: Inner circumferential cover member
- 31: Inner circumferential side facing portion
- 32: Inner circumferential side connecting portion
- 33: Inner circumferential side communication portion
- 34a: First cylindrical member
- 34b: Second cylindrical member
- 41: Magnetic pole piece
- 41s: Side surface of magnetic pole piece
- 42: Interjacent space
- 5: Outer diameter side magnet field
- 51: Magnetic pole pair
- 52: Support member
- 53: Communication portion
- 6: Coil
- 7: Inner diameter side magnet field
- 71: Magnetic pole pair
- 72: Support member
- 8: Delimiting member
- 9: Magnetic gear
- D: Cooling medium
- G: Air gap
- H: Housing
- a: Circumferential direction
- b: Axial direction
- c: Radial direction
- 1: Axis

## Claims

1. A magnetic pole piece device disposed between an inner diameter side magnet field and an outer diameter side magnet field of a magnetic gear, comprising:
an outer circumferential cover member disposed opposite to the outer diameter side magnet field and having a cylindrical shape;
an inner circumferential cover member disposed opposite to the inner diameter side magnet field and having a cylindrical shape; and
a plurality of magnetic pole pieces disposed at intervals in a circumferential direction between the outer circumferential cover member and the inner circumferential cover member,
wherein the outer circumferential cover member includes a plurality of outer circumferential side facing portions facing outer circumferential surfaces of the plurality of magnetic pole pieces, and a plurality of outer circumferential side connecting portions for connecting two adjacent outer circumferential side facing portions of the plurality of outer circumferential side facing portions,
wherein the inner circumferential cover member includes a plurality of inner circumferential side facing portions facing inner circumferential surfaces of the plurality of magnetic pole pieces, and a plurality of inner circumferential side connecting portions for connecting two adjacent inner circumferential side facing portions of the plurality of inner circumferential side facing portions,
wherein each of the plurality of outer circumferential side connecting portions includes an outer circumferential side communication portion through which an inner circumferential side and an outer circumferential side of the outer circumferential cover member communicate with each other, and
wherein each of the plurality of inner circumferential side connecting portions includes an inner circumferential side communication portion through which an inner circumferential side and an outer circumferential side of the inner circumferential cover member communicate with each other.

2. The magnetic pole piece device according to claim 1,
wherein the plurality of outer circumferential side connecting portions include a first outer circumferential side connecting portion,
wherein the plurality of inner circumferential side connecting portions include a first inner circumferential side connecting portion facing the first outer circumferential side connecting portion, and
wherein the outer circumferential side communication portion of the first outer circumferential side connecting portion and the inner circumferential side communication portion of the first inner circumferential side connecting portion are located at different positions in an axial direction.

3. The magnetic pole piece device according to claim 1 or 2,
wherein the plurality of outer circumferential side connecting portions include a first outer circumferential side connecting portion,
wherein the plurality of inner circumferential side connecting portions include a first inner circumferential side connecting portion facing the first outer circumferential side connecting portion, and
wherein the outer circumferential side communication portion of the first outer circumferential side connecting portion and the inner circumferential side communication portion of the first inner circumferential side connecting portion are located at different positions in a circumferential direction.

4. The magnetic pole piece device according to any one of claims 1 to 3,
wherein at least one of the outer circumferential side communication portion or the inner circumferential side communication portion includes one or more through holes.

5. The magnetic pole piece device according to any one of claims 1 to 3,
wherein at least one of the outer circumferential cover member or the inner circumferential cover member is formed of a plurality of cylindrical tubular members disposed at an interval from each other in an axial direction, and
wherein at least one of the outer circumferential side communication portion or the inner circumferential side communication portion is formed by the interval in the axial direction.

6. A magnetic gear, comprising:
an inner diameter side magnet field;
an outer diameter side magnet field disposed on an outer diameter side relative to the inner diameter side magnet field; and
the magnetic pole piece device according to any one of claims 1 to 5 disposed between the inner diameter side magnet field and the outer diameter side magnet field.

7. The magnetic gear according to claim 6,
wherein the outer diameter side magnet field includes a communication portion through which an inner circumferential side and an outer circumferential side of the outer diameter side magnet field communicate with each other.

8. A magnetic geared motor, comprising:
the magnetic gear according to claim 6 or 7.

9. A magnetic geared generator, comprising:
the magnetic gear according to claim 6 or 7.
